# EUROPÄISCHE PATENTSCHRIFT

(11) **EP 1 142 080 B1**
(45) Veröffentlichungstag und Bekanntmachung des Hinweises auf die Patenterteilung: **06.10.2004**
(21) Anmeldenummer: 00904829.9
(22) Anmeldetag: 04.01.2000
(51) Int. Cl.: H02J 13/00

(54) **VERFAHREN UND EINRICHTUNG ZUM BETRIEB EINES BUSANKOPPLERS**
METHOD AND DEVICE FOR OPERATING A BUS COUPLER
PROCEDE ET DISPOSITIF POUR FAIRE FONCTIONNER UN COUPLEUR DE BUS

(30) Priorität: 14.01.1999 DE 19901196
(43) Veröffentlichungstag der Anmeldung: 10.10.2001
(73) Patentinhaber: SIEMENS AKTIENGESELLSCHAFT, 80333 München (DE)
(72) Erfinder: FICHTNER, Norbert, D-84069 Schierling (DE); MUNZ, Dieter, D-91315 Höchstadt (DE)
(86) Internationale Anmeldenummer: PCT/DE2000/000032
(87) Internationale Veröffentlichungsnummer: WO 2000/042694

(56) Entgegenhaltungen:
- EP-A- 0 854 587
- WO-A-98/04027

## Beschreibung

Die Erfindung bezieht sich zunächst auf ein Verfahren zum Betrieb eines Busankopplers für einen Bus der Gebäudesystemtechnik, der Energie für die Bordnetzversorgung von Teilnehmerstationen und Nachrichtenimpulse führt, insbesondere für den Bus EIB der European Installation Bus Association, der EIBA. Zur Erhöhung der Übertragungsweite wird zu Nachrichtenimpulsen jeweils ein Ausgleichsimpuls erzeugt.Ein Bus der Gebäudesystemtechnik besteht in der Regel aus einem Leitungssystem aus zwei Drähten, die zur Vermeidung von Störeinstrahlung verdrillt sind.

Zur Ankopplung von Teilnehmerstationen werden Busankoppler eingesetzt, die in der Regel mit Übertragern als Weiche für Information und Energie dienen. Es sind auch vereinzelt übertragerlose Busankoppler vorgeschlagen worden (WO 98/04027). In derartigen übertragerlosen Busankopplungen wird das Verhalten eines Busankopplers mit Übertrager nachgebildet. Diese Schaltungen lassen sich kleiner bauen, da der Raumbedarf für einen Übertrager entfällt. Die Energie für die Versorgung des Bordnetzes des Busankopplers und auch die Energie anzuschließender Einrichtungen mit Anwenderelektronik wird dem Bus entnommen. Man benötigt also Strom für den Ausgleichsimpuls und Strom für Bordnetzelektronik.

Der Erfindung liegt die Aufgabe zugrunde, ein Verfahren und eine Einrichtung zum Betrieb eines Busankopplers für einen Bus der Gebäudesystemtechnik zu entwickeln, das besonders sparsam mit der benötigten Energie umgeht bzw. die einen verlustarmen Betrieb ermöglicht.

Die Lösung der geschilderten Aufgabe erfolgt zunächst durch ein Verfahren nach Patentanspruch 1. Zur Bildung eines Ausgleichsimpulses wird ein Ausgleichsstrom aus einem Grundstrom gebildet, wobei der Grundstrom auch darauf abgestellt ist, einen mittleren Strombedarf einer Teilnehmerstation und einer daran anschließbaren Anwenderelektronik zu versorgen. Der Grundstrom wird im Ausmaß des Bedarfs der Anwenderelektronik dieser zugeführt und bei Teilbedarf an der Anwenderelektronik gegen Bezugspotential vorbeigeführt. Bei einem Strombedarf der Anwenderelektronik oberhalb des Grundstroms wird der Strombedarf aus einem Zusatzstrom gespeist, wobei der Zusatzstrom in einer Anlaufphase zur Vermeidung erhöhter Stromentnahme durch die Anwenderelektronik, wie sie infolge immanenter Kapazitäten auftritt, kleiner als der maximal zulässige Strom während des Anlaufs abzüglich des Grundstroms eingestellt wird. Nach der Anlaufphase wird der Zusatzstrom erhöht, und zwar bis auf einen maximal zulässigen Strom in einer an die Anlaufphase anschließenden Betriebsphase. Der Grundstrom wird sozusagen zwischen der Anwenderelektronik und einer Einrichtung zur Spannungsversorgung auch in Teilbeträgen hin- und hergeschaltet, wobei der Grundstrom auch den Ausgleichsstrom bildet. Der Grundstrom bildet also zumindest den Ausgleichsstrom und erfüllt bei Energiebedarf der Anwenderelektronik neben dem Energiebedarf einer Schaltungsanordnung des Busankopplers auch diesen.

Eine vorteilhafte Einrichtung zum Betrieb eines Busankopplers zur Durchführung des Verfahrens kann nach Anspruch 2 im wesentlichen wie folgt aufgebaut sein:
Zur Bildung eines Ausgleichsimpulses ist ein Ausgleichsstrom in einer Stromquelle zur Erzeugung eines Grundstroms gebildet, wobei die Stromquelle auf eine Grundkapazität gegen Bezugspotential arbeitet. Die Stromquelle mit der Grundkapazität ist zwischen den Busleitern eingeschaltet, von denen einer hier das Bezugspotential bildet. Die Grundkapazität kann die Bordnetzspannung für die Anwenderelektronik aufbauen bzw. bereitstellen. Der Grundkapazität ist ein Shuntregler gegen Bezugspotential parallelgeschaltet, der auf die Einhaltung der Bordnetzspannung der Anwenderelektronik eingestellt ist.

Am Shuntregler ist eine entsprechende Vergleichsspannung angelegt. Am Shuntregler ist auf dem Niveau der Bordnetzspannung für die Anwenderelektronik ein Längsregler mit seiner Ausgangsseite angeschlossen, dessen Vergleichsspannung kleiner als die Vergleichsspannung am Shuntregler ist. Der Längsregler ist mit seiner Eingangsseite mit einer Zusatzkapazität gegen Bezugspotential verbunden, auf die eine geregelte Stromquelle im Sinne der Aufrechterhaltung der Betriebsspannung arbeitet. Die Spannung an der Zusatzkapazität wird gegen Bezugspotential durch eine Überwachungseinrichtung überwacht, die auf die Regeleinrichtung der Zusatzstromquelle arbeitet. Die Zusatzstromquelle übernimmt nach ihrer Anlaufphase die Versorgung erhöhten Strombedarfs der Anwenderelektronik. Hierbei wirkt der Längsregler von der Anwenderelektronik her gesehen wie eine zusätzliche Energiequelle, die die Spannung an der Grundkapazität aufrechterhält. Eine derartige Anordnung läßt sich in einem integrierten Schaltkreis, einem IC, ausführen.

Es ist günstig, im Strompfad der Zusatzstromquelle einen Stromsensor anzuordnen, dessen Ausgang mit einem Anschluß der Regeleinrichtung der Zusatzstromquelle verbunden ist, wobei am Anschluß der Zusatzstromquelle eine Vergleichereinrichtung und eine Speichereinrichtung angeschlossen ist. Diese ist dafür ausgelegt, den Strom des gemessenen Zusatzstroms zu speichern und nach einem Spannungseinbruch bei wiederkehrender Spannung den Zusatzstrom durch die Regeleinrichtung auf den zuvor gemessenen Wert des Zusatzstroms einzuregeln. Dadurch wird nach einem Spannungseinbruch der vorausgehende Arbeitszustand schnell wieder erreicht.

Es ist vorteilhaft, die Regeleinrichtung für die Zusatzstromquelle derart auszulegen, daß eine Stromänderung auf Werte kleiner oder gleich 0,5 mA/ms begrenzt ist. Dadurch stellt man sicher, daß die Busseite auch bei zahlreichen Busankopplern nicht zu stark belastet werden kann.

Wenn der Längsregler in der Anlaufphase abgeschaltet ist, kann die Anwenderelektronik in der Anlaufphase nur den Grundstrom beanspruchen.

Der IC kann vom Typ eines sogenannten UARP für verdrillte Zweidrahtleitungen, englisch: twisted pair, also ein TPUARP sein.

Nach einer einfachen Ausführungsform kann der Längsregler auf seiner Eingangsseite einen Schalter in der Ansteuerung seines Stromventils aufweisen, der beim Erreichen einer für das Ende der Anlaufphase charakteristischen Spannung - an der Einrichtung zur Spannungsüberwachung für die Regeleinrichtung der Zusatzstromquelle - in den eingeschalteten Zustand überführt wird, indem die Einrichtung zur Spannungsüberwachung den Schalter beaufschlagt.

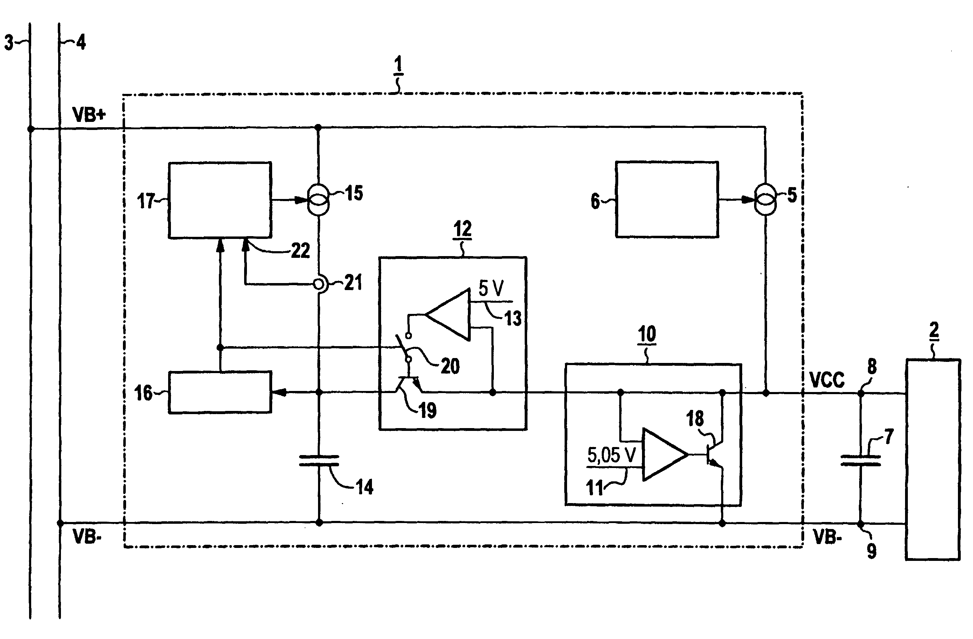

Die Erfindung soll nun anhand eines in der Zeichnung grob schematisch wiedergegebenen Ausführungsbeispiels näher erläutert werden:
Ein Busankoppler beinhaltet oder umfaßt eine integrierte Schaltung 1 zur Spannungsversorgung weiterer Elektronik des Busankopplers und zur Versorgung einer Anwenderelektronik 2. Die integrierte Schaltung 1 ist an einem Bussystem mit Busleitern 3,4 angeschlossen. Eine Stromquelle 5 zur Erzeugung eines Grundstroms ist durch eine Regeleinrichtung 6 zur Bildung eines Ausgleichsstroms für einen Ausgleichsimpuls geregelt. Die Grundstromquelle 5 ist mit einer Grundkapazität 7 verbunden, die an ihrer anderen Seite mit einem Busleiter 4 verbunden ist. Im Ausführungsbeispiel führt dieser das negative Buspotential NB- als Bezugspotential. An der Grundkapazität 7 kann die Arbeitsspannung für eine Anwenderelektronik 2 bereitgestellt werden. Die Anwenderspannung kann also am Potentialpunkt 8 für VCC gegen Bezugspotential bereitgestellt werden. An ihrem anderen Ende ist die Grundstromquelle 5 mit dem anderen Busleiter 3, dem Busleiter für positive Busspannung VB+ verbunden. Der Grundkapazität 7 ist ein Shuntregler 10 parallelgeschaltet, an dem beispielsweise eine Vergleichsspannung 11 von 5,05 V angelegt ist. Auf dem Niveau der Bordnetzspannung VCC für eine Anwenderelektronik 2 ist ein Längsregler 12 mit einer Vergleichsspannung 13 mit seiner Ausgangsseite angeschlossen. Mit seiner Eingangsseite ist der Längsregler mit einer Zusatzkapazität gegen Bezugspotential verbunden. Auf die Zusatzkapazität 14 arbeitet eine geregelte Zusatzstromquelle 15 im Sinne der Aufrechterhaltung der Betriebsspannung für die Anwenderelektronik 2. Die Spannung an der Zusatzkapazität 14 ist durch eine Überwachungseinrichtung 16 überwacht, die auf die Regeleinrichtung 17 der Zusatzstromquelle 15 arbeitet. Die Vergleichsspannung 13 am Längsregler ist vorteilhaft etwas kleiner als die Vergleichsspannung 11 am Shuntregler 10, um stabilen Betrieb zu gewährleisten.

Der Shuntregler 10 weist ein steuerbares Stromventil 18 auf und der Längsregler ein steuerbares Stromventil 19. Die Vergleichsspannung 13 am Längsregler 12 kann im Ausführungsbeispiel 5 V betragen, wenn die Vergleichsspannung am Shuntregler auf 5,05 V eingestellt ist.

Die Regeleinrichtung 6 der Grundstromquelle 5 kann beispielsweise einen Grundstrom von 3 mA bereitstellen. Am Potentialpunkt 8 für VCC können beispielsweise 5 V +/- 5 % bereitgestellt werden. Die Busspannung zwischen den Busleitern 3 und 4 kann beispielsweise in einem Arbeitsbereich von 20 bis 30 V anstehen.

Die Regeleinrichtung 17 für die Zusatzstromquelle 15 kann beispielsweise im Anlaufbereich den Strom der Zusatzstromquelle auf 6 mA und danach auch 13 mA begrenzen. Vorteilhaft ist es, die Regeleinrichtung generell so auszulegen, daß Stromänderungen auf Werte kleiner oder gleich 0,5 mA/ms begrenzt werden.

Der Längsregler 12 weist im Ausführungsbeispiel auf seiner Eingangsseite einen Schalter 20 in der Ansteuerung seines Stromventils 19 auf. Bei geöffnetem Schalter 20 ist der Längsregler abgeschaltet. Vorteilhaft wird der Längsregler erst nach der Anlaufphase der Zusatzstromquelle 15 geschlossen und der Längsregler 12 damit eingeschaltet.

Im Strompfad der Zusatzstromquelle 15 ist vorteilhaft ein Stromsensor 21 angeordnet, dessen Ausgang mit einem Anschluß 22 der Regeleinrichtung 17 der Zusatzstromquelle 15 verbunden ist. Die Regeleinrichtung ist dafür ausgelegt, daß ein an ihrem Anschluß 22 anstehender Wert des vom Stromsensor 21 gemessenen Stroms gespeichert wird und nach einem Spannungseinbruch bei wiederkehrender Spannung der Zusatzstrom durch die Regeleinrichtung 17 auf den zuvor gemessenen Wert des Zusatzstroms eingeregelt wird.

Die Einrichtung zur Spannungsversorgung und zur Bildung eines Ausgleichsstroms funktioniert wie folgt:
Wenn die integrierte Schaltung 1 an die Busspannung zwischen den Busleitern 3 und 4 angeschlossen wird, arbeitet die Grundstromquelle 5 auf die Grundkapazität 7 und baut hier eine Arbeitsspannung VCC für eine Anwenderelektronik 2 auf. Der Strom der Grundstromquelle 5 kann so verändert werden, daß er vom Bus her gesehen, einen Ausgleichsstrom darstellt. Dieser Ausgleichsstrom kann den Strombedarf einer Anwenderelektronik 2 decken oder er wird ganz oder teilweise von einem Shuntregler 10 an der Grundkapazität 7 vorbei gegen Bezugspotential 9 abgeleitet. In der Anlaufphase lädt die Zusatzstromquelle 15 die Zusatzkapazität 14 auf, bis eine vorgegebene Spannung erreicht wird. In der Anlaufphase sorgt eine Regeleinrichtung 17 der Zusatzstromquelle 15 für einen vorgegebenen kleineren Strom als nach der Anlaufphase. Wenn die Spannungsüberwachung 16 das Erreichen der vorgegebenen Spannung an der Zusatzkapazität 14 feststellt, wird der Längsregler 12 wirksam. Besonders klare Verhältnisse erzielt man, wenn der Längsregler 12 einen Schalter 20 aufweist, der nach Erreichen der vorgegebenen Spannung an der Zusatzkapazität 14 eingeschaltet, also in den leitenden Zustand überführt wird. Der Längsregler 12 wirkt dann an seiner Ausgangsseite zum Shuntregler 10 hin wie eine zusätzliche Stromquelle, die erhöhten Strombedarf einer Anwenderelektronik versorgt und die Grundstromquelle 5 entlastet. Dadurch läßt sich an der Grundkapazität 7 die Bordnetzspannung VCC einer Anwenderelektronik aufrechterhalten.

Es ist weiter günstig, die maximale Stromentnahme beim Anlegen der Busspannung auf 3 mA von der Grundstromquelle 5 und auf 6 mA von der Zusatzstromquelle 15, also in der Summe auf 9 mA zu begrenzen, wodurch man einen sogenannten Softstart erzielt. Nach der Anlaufphase wird der Strom dann gemäß Ausführungsbeispiel auf 3 mA + 13 mA, also in der Summe 16 mA, begrenzt. Diese Werte werden im eingeschwungenen Zustand bei Busanschaltung erzielt. Insgesamt erreicht man eine automatische Einstellung auf den Strombedarf der Anwenderelektronik, ohne den Datenverkehr auf dem Bus durch Laststromänderungen der Anwenderelektronik zu stören. Nach Vorgaben der EIBA soll die Spannungsversorgung bei Einbrüchen der Busspannung bis zu 2 ms sichergestellt sein. Mit dem geschilderten Verfahren und der Einrichtung zur Spannungsversorgung läßt sich dies leicht erzielen.

Im Betrieb wirkt der Shuntregler 10 wie ein veränderlicher Widerstand, wobei eine Stromentnahme bis zu 3 mA keine Erhöhung der Stromentnahme aus dem Bus bedeutet.

Die Spannung an der Zusatzkapazität kann für einen Anlauf auf 8,5 V eingestellt sein. Sobald diese Spannung erreicht oder überschritten wird, schaltet dann die Regeleinrichtung 17 von dem niedrigeren Anlaufstrom auf den höheren Betriebsstrom von beispielsweise 13 mA um. Der Softstart wird erst bei einer Spannung an der Zusatzkapazität 14 von beispielsweise kleiner oder gleich 6 V eingeleitet. Das Abschalten des Längsreglers 12 benötigt zum Regeln einer Spannung VCC von 5 V eine Eingangsspannung, die um 1 V höher ist, also 6 V beträgt. Das Rücksetzen der Strombegrenzung auf einen Wert der Anlaufphase, beispielsweise 6 mA, erfolgt auch aus der Betriebsphase, wenn der Zusatzstrom also größer als 6 mA war, mit einer Begrenzung von 0,5 mA/ms. Die Spannungsregelung des Shuntreglers 10 und des Längsregler 12 wird jeweils so eingestellt, daß der Shuntregler auf eine höhere Spannung als der Längsregler regelt. Mit dieser Maßnahme wird ein automatisches, belastungsabhängiges Umschalten der Spannungsregelung auf VCC erreicht. Ist der benötigte Strom der angeschlossenen Anwenderelektronik größer als der Grundstrom, beispielsweise 3 mA, kann der Shuntregler 10 nicht mehr regeln und sperrt. Da der Grundstrom dann nicht ausreicht, sinkt die Spannung VCC. Sobald die Spannung kleiner als ein vorgegebener Wert, beispielsweise 5 V +/- einer Toleranz, erreicht wird, aktiviert sich der Längsregler 12 und regeln VCC auf die gewünschte Spannung, beispielsweise 5 V. Der benötigte zusätzliche Strom fließt nun aus der Zusatzstromquelle 15 bzw. aus der Zusatzkapazität 14 über den Längsregler 12 zur Anwenderelektronik.

Die Zusatzkapazität 14 bewirkt darüber hinaus, daß bei Spannungseinbrüchen auf dem Bus kleiner oder gleich einer vorgegebenen Toleranzzeit, beispielsweise von 2 ms, die Spannungsversorgung der Anwenderelektronik aufrechterhalten bleibt. Nach dem Spannungseinbruch wird die Zusatzkapazität 14 wieder über die Zusatzstromquelle 15 aufgeladen. Die Zusatzkapazität 14 kann darüber hinaus Stromstöße, die durch schnelle Laständerungen verursacht werden, kompensieren.

## Patentansprüche

1. Verfahren zum Betrieb eines Busankopplers für einen Bus (3,4) der Gebäudesystemtechnik, der Energie für die Bordnetzversorgung von Teilnehmerstationen und Nachrichtenimpulse führt, insbesondere für den Bus der EIBA, wobei zu Nachrichtenimpulsen jeweils ein Ausgleichsimpuls zur Erhöhung der Übertragungsweite erzeugt wird, **dadurch gekennzeichnet, dass** zur Bildung eines Ausgleichsimpulses ein Ausgleichsstrom aus einem Grundstrom (von 5) gebildet wird, wobei der Grundstrom auch darauf abgestellt ist, einen mittleren Strombedarf einer Teilnehmerstation und einer daran anschließbaren Anwenderelektronik (2) zu versorgen, wobei der Grundstrom (von 5) im Ausmaß des Bedarfs der Anwenderelektronik dieser zugeführt wird und bei Teilbedarf an der Anwenderelektronik (2) gegen Bezugspotential (9) vorbeigeführt wird, und dass bei einem Strombedarf der Anwenderelektronik (2) oberhalb des Grundstroms der Strombedarf aus einem Zusatzstrom (von 15) gespeist wird, wobei der Zusatzstrom in einer Anlaufphase zur Vermeidung erhöhter Stromentnahme durch die Anwenderelektronik (2) kleiner als der maximal zulässige Strom während des Anlaufs abzüglich des Grundstroms ist und dass der Zusatzstrom nach der Anlaufphase erhöht wird bis auf einen maximal zulässigen Strom in einer an die Anlaufphase anschließenden Betriebsphase.

2. Einrichtung zur Durchführung des Verfahrens nach Anspruch 1, für einen Bus (3,4) der Gebäudesystemtechnik, der Energie für die Bordnetzversorgung von Teilnehmerstationen und Nachrichtenimpulse führt, insbesondere für den Bus der EIBA, wobei zu Nachrichtenimpulsen Ausgleichsimpulse zur Erhöhung der Übertragungsweite durch Reduzierung der Systemausschwingzeit erzeugt werden, **dadurch gekennzeich-net, dass** zur Bildung eines Ausgleichsimpulses ein Ausgleichsstrom in einer Stromquelle (5) zur Erzeugung eines Grundstroms gebildet ist, die auf eine Grundkapazität (17) gegen Bezugspotential (9) arbeitet, wobei die Stromquelle mit der Grundkapazität zwischen den Busleitern (3,4) angeschaltet ist, von denen einer hier das Bezugspotential bildet, wobei die Grundkapazität die Bordnetzspannung für die Anwenderelektronik aufbaut, wobei der Grundkapazität (17) ein Shuntregler (10) gegen Bezugspotential (9) parallelgeschaltet ist, der auf die Einhaltung der Bordnetzspannung (8)der Anwenderelektronik eingestellt ist, in dem eine entsprechende Vergleichsspannung (11) angelegt ist, und wobei am Shuntregler (10) auf dem Niveau der Bordnetzspannung (8) für die Anwenderelektronik ein Längsregler mit seiner Ausgangsseite angeschlossen ist, dessen Vergleichsspannung (13) kleiner als die Vergleichsspannung am Shuntregler (10) ist, wobei der Längsregler (12) mit seiner Eingangsseite mit einer Zusatzkapazität (14) gegen Bezugspotential (9) verbunden ist, auf die eine geregelte Zusatzstromquelle (15) im Sinne der Aufrechterhaltung der Betriebsspannung (8) arbeitet, wozu die Spannung an der Zusatzkapazität (14) gegen Bezugspotential (9) durch eine Überwachungseinrichtung (16) überwacht ist, die auf die Regeleinrichtung (17) der Zusatzstromquelle arbeitet.

3. Einrichtung nach Anspruch 2, **dadurch gekennzeichnet, daß** im Strompfad der Zusatzstromquelle (15) ein Stromsensor (21) angeordnet ist, dessen Ausgang mit einem Anschluß (22) der Regeleinrichtung (17) der Zusatzstromquelle verbunden ist, wobei am Anschluß der Zusatzstromquelle eine Vergleicher- und Speichereinrichtung angeschlossen ist, die dafür ausgelegt ist, den Wert des gemessenen Zusatzstroms zu speichern und nach einem Spannungseinbruch bei wiederkehrender Spannung den Zusatzstrom durch die Regeleinrichtung auf den zuvor gemessenen Wert des Zusatzstroms einzuregeln.

4. Einrichtung nach Anspruch 2 oder 3, **dadurch gekennzeichnet, daß** die Regeleinrichtung (17) der Zusatzstromquelle (15) derart ausgelegt ist, daß eine Stromänderung auf Werte kleiner oder gleich 0,5 mA/mS begrenzt ist.

5. Einrichtung nach einem der Ansprüche 2 bis 4, **dadurch gekennzeichnet, daß** der Längsregler (12) in der Anlaufphase abgeschaltet ist.

6. Einrichtung nach Anspruch 5, **dadurch gekennzeichnet, daß** der Längsregler (12) auf seiner Eingangsseite einen Schalter (20) in der Ansteuerung seines Stromventils (19) aufweist, der beim Erreichen einer für das Ende der Anlaufphase charakteristischen Spannung an der Einrichtung zur Spannungsüberwachung für die Regeleinrichtung der Zusatzstromquelle in den eingeschalteten, also leitenden, Zustand überführt wird.

7. Einrichtung nach einem der Ansprüche 1 bis 6, **da-durch gekennzeichnet, daß** eine Schaltungsanordnung zur Ausführung des Verfahrens nach Anspruch 1 oder zur Bildung einer Spannungsversorgung nach einem der ansprüche 2 bis 6 in einem integralen Schaltkreis ,IC, ausgeführt ist.

8. Einrichtung nach Anspruch 7, **dadurch ge-kennzeichnet, daß** der IC vom Typ eines sogenannten UARP für verdrillte Zweidrahtleitungen (englisch: twisted pair), also ein TPUARP ist.

## Claims

1. A method for operating a bus coupler for a bus (3, 4) of the building system technology, which bus carries power for the onboard electrical system supply of subscriber stations and message pulses, in particular for the bus of the EIBA, wherein an equalizing pulse is generated in addition to message pulses in each case for the purpose of increasing the transmission distance, **characterized in that** in order to form an equalizing pulse, an equalizing current is formed from a base current (from 5), wherein the base current also provides for the supply of an average current requirement of a subscriber station and of user electronics (2) which are connectable thereto, wherein the base current (from 5) is supplied to the user electronics in accordance with the requirement thereof, and diverted to ground (9) in the case of partial requirement at the user electronics (2), and that if a current requirement of the user electronics (2) exceeds the base current, the current requirement is supplied from an additional current (from 15), wherein the additional current is adjusted during a startup phase to be lower than the maximum permitted current during the startup minus the base current, in order to avoid increased current consumption by the user electronics (2), and that the additional current is increased following the startup phase to a maximum permitted current in an operating phase which follows the startup phase.

2. A device for carrying out the method as claimed in Claim 1 for a bus (3, 4) of the building system technology, which bus carries power for the onboard electrical system supply of subscriber stations and message pulses, in particular for the bus of the EIBA, wherein equalizing pulses are generated in addition to message pulses for the purpose of increasing the transmission distance by reducing the system decay time, **characterized in that** in order to form an equalizing pulse, an equalizing current is formed in a current source (5) for generating a base current, said current source acting on a base capacitance (17) to ground (9), wherein the current source with the base capacitance is connected between the bus conductors (3, 4), one of which forms the ground in this case, wherein the base capacitance provides the onboard electrical system voltage for the user electronics, wherein a shunt regulator (10) to ground (9) is connected in parallel with the base capacitance (17), said shunt regulator being adjusted in accordance with the onboard electrical system voltage (8) of the user electronics, wherein a corresponding reference voltage (11) is applied in the shunt regulator, and wherein a series regulator whose reference voltage (13) is lower than the reference voltage at the shunt regulator (10) is connected on its output side to the shunt regulatory (10) on the level of the onboard electrical system voltage (8) for the user electronics, wherein the series regulator (12) is connected on its input side to an additional capacitance (14) to ground (9), wherein a regulated additional current source (15) acts on said additional capacitance for the purpose of maintaining the operating voltage (8), for which purpose the voltage at the additional capacitance (14) to ground (9) is monitored by means of a monitoring device (16) which acts on the regulating device (17) of the additional current source.

3. The device as claimed in Claim 2, **characterized in that** a current sensor (21) is arranged in the current path of the additional current source (15), the output of said current sensor being connected to an interface (22) of the regulating device (17) of the additional current source, wherein a comparator and storage device is connected at the interface of the additional current source, said device being configured in such a way that it stores the value of the measured additional current and, in the case of a recovered voltage following a voltage dip, adjusts the additional current by means of the regulating device to the previously measured value of the additional current.

4. The device as claimed in Claim 2 or 3, **characterized in that** the regulating device (17) of the additional current source (15) is configured in such a way that a current change is limited to values lower than or equal to 0.5 mA/ms.

5. The device as claimed in one of the Claims 2 to 4, **characterized in that** the series regulator (12) is disconnected in the startup phase.

6. The device as claimed in Claim 5, **characterized in that** the series regulator (12) has a switch (20) in the control of its current valve (19) on its input side, said switch being switched into the active or conducting state when a voltage which is characteristic of the end of the startup phase is reached at the device for voltage monitoring for the regulating device of the additional current source.

7. The device as claimed in one of the Claims 1 to 6, **characterized in that** a circuit arrangement for executing the method as claimed in Claim 1 or for forming a voltage supply as claimed in one of the Claims 2 to 6 is embodied in an integral circuit or IC.

8. The device as claimed in Claim 7, **characterized in that** the IC is of the so-called UARP type for twisted two-wire lines (twisted pair), i.e. a TPUARP.

## Revendications

1. Procédé d'exploitation d'un coupleur de bus pour un bus (3, 4) de la technique des systèmes pour bâtiments qui apporte de l'énergie pour l'alimentation du réseau de bord de postes d'abonnés et des impulsions d'informations, notamment pour le bus de l'EIBA, une impulsion d'égalisation étant produite à chaque impulsion d'information pour augmenter la portée de transmission, **caractérisé par le fait que**, pour former une impulsion d'égalisation, on forme un courant d'égalisation à partir d'un courant de base (de 5), le courant de base étant adapté pour couvrir une consommation de courant moyenne d'un poste d'abonné et d'une électronique d'application (2) raccordable à celui-ci, le courant de base (de 5) étant envoyé à l'électronique d'application en fonction de la consommation de celle-ci et, en cas de consommation partielle, passant l'électronique d'application (2) pour aller au potentiel de référence (9), et que, dans le cas d'une consommation de courant de l'électronique d'application (2) supérieure au courant de base, la consommation de courant est couverte à partir d'un courant supplémentaire (de 15), le courant supplémentaire pendant une phase de démarrage, pour éviter une consommation de courant accrue de l'électronique d'application (2), étant réglé inférieur au courant maximal autorisé pendant le démarrage moins le courant de base et le courant supplémentaire après la phase de démarrage étant augmenté jusqu'à un courant maximal autorisé dans une phase de fonctionnement faisant suite à la phase de démarrage.

2. Dispositif pour la mise en oeuvre du procédé selon la revendication 1, pour un bus (3, 4) de la technique des systèmes pour bâtiments qui apporte de l'énergie pour l'alimentation du réseau de bord de postes d'abonnés et des impulsions d'informations, notamment pour le bus de l'EIBA, des impulsions d'égalisation étant produites pour les impulsions d'informations pour augmenter la portée de transmission en réduisant le temps d'amortissement du système, **caractérisé par le fait que**, pour former une impulsion d'égalisation, un courant d'égalisation est formé dans une source de courant (5) qui est destinée à la production d'un courant de base et qui agit sur une capacité de base (17) au potentiel de référence (9), la source de courant avec la capacité de base étant branchée entre les conducteurs de bus (3, 4) dont l'un forme ici le potentiel de référence, la capacité de base construisant la tension de réseau de bord pour l'électronique d'application, un régleur de shunt (10) étant branché en parallèle avec la capacité de base (17) par rapport au potentiel de référence (9) et étant réglé sur le respect de la tension de réseau de bord (8) de l'électronique d'application du fait qu'une tension de comparaison (11) appropriée est appliquée et un régleur longitudinal étant raccordé avec son côté de sortie au régleur de shunt (10) au niveau de la tension de réseau de bord (8) pour l'électronique d'application et ayant une tension de comparaison (13) inférieure à la tension de comparaison du régleur de shunt (10), le régleur longitudinal (12) étant relié par son côté d'entrée à une capacité supplémentaire (14) au potentiel de référence (9) sur laquelle la source de courant supplémentaire (15) régulée agit dans le sens du maintien de la tension de fonctionnement (8), ce pour quoi la tension à la capacité supplémentaire (14) par rapport au potentiel de référence (9) est surveillée par un dispositif de surveillance (16) qui agit sur le dispositif de régulation (17) de la source de courant supplémentaire.

3. Dispositif selon la revendication 2, **caractérisé par le fait qu'**il est prévu dans le trajet du courant de la source de courant supplémentaire (15) un capteur de courant (21) dont la sortie est reliée à une borne (22) du dispositif de régulation (17) de la source de courant supplémentaire, un dispositif de comparaison et de mémorisation étant raccordé à la suite de la source de courant supplémentaire et étant conçu pour mémoriser la valeur du courant supplémentaire mesuré et pour, après une chute de tension, régler le courant supplémentaire au moyen du dispositif de régulation sur la valeur précédemment mesurée du courant supplémentaire lorsque la tension revient.

4. Dispositif selon la revendication 2 ou 3, **caractérisé par le fait que** le dispositif de régulation (17) de la source de courant supplémentaire (15) est conçu de telle sorte qu'une variation de courant est limitée à des valeurs inférieures ou égales à 0,5 mA/ms.

5. Dispositif selon l'une des revendications 2 à 4, **caractérisé par le fait que** le régleur longitudinal (12) est arrêté pendant la phase de démarrage.

6. Dispositif selon la revendication 5, **caractérisé par le fait que** le régleur longitudinal (12) comporte sur son côté d'entrée un interrupteur (20) dans la commande de sa soupape de courant (19), lequel interrupteur est mis à l'état connecté c'est-à-dire conducteur lorsqu'une tension caractéristique de la fin de la phase de démarrage est atteinte au dispositif de surveillance de tension pour le dispositif de régulation de la source de courant supplémentaire.

7. Dispositif selon l'une des revendications 1 à 6, **caractérisé par le fait qu'**un circuit pour la réalisation du procédé selon la revendication 1 ou pour la formation d'une alimentation en tension selon l'une des revendications 2 à 6 est réalisé dans un circuit intégré IC.

8. Dispositif selon la revendication 7, **caractérisé par le fait que** le circuit intégré IC est du type d'un UARP pour paires torsadées (en anglais : twisted pair), c'est-à-dire un TPUARP.
